Europäisches Patentamt

(19) European Patent Office

Office européen des brevets

(11) Numéro de publication: **0 269 533 B1**

# (12) FASCICULE DE BREVET EUROPEEN

(45) Date de publication de fascicule du brevet:
**17.07.91**

(51) Int. Cl.⁵: **H01R 4/24**, H02G 7/05

(21) Numéro de dépôt: 87420302.9

(22) Date de dépôt: **04.11.87**

(54) **Pince d'ancrage pour conducteur électrique isolé équipé d'un câble porteur également isolé.**

(30) Priorité: 06.11.86 FR 8616027

(43) Date de publication de la demande:
**01.06.88 Bulletin 88/22**

(45) Mention de la délivrance du brevet:
**17.07.91 Bulletin 91/29**

(84) Etats contractants désignés:
**AT BE CH DE ES GB GR IT LI LU NL SE**

(56) Documents cités:
**FR-A- 2 379 925**
**FR-A- 2 436 509**

(73) Titulaire: **MALICO**
**Z.I. de Mayencin Rue des Essarts**
**F-38610 Gieres(FR)**

(72) Inventeur: **Lienart, Jean-Pierre**
**Saint Martin d'Uriage**
**F-38410 Uriage(FR)**

(74) Mandataire: **Maureau, Pierre et al**
**Cabinet GERMAIN & MAUREAU B.P. 3011**
**F-69392 Lyon Cédex 03(FR)**

## Description

La présente invention concerne une pince d'ancrage pour conducteur électrique isolé équipé d'un câble porteur également isolé et plus spécialement, quoique non exclusivement, pour les conducteurs de ce type dans lesquels l'épaisseur de l'isolant tubulaire du câble porteur est importante par rapport à la section transversale de ce dernier.

Pour l'ancrage des conducteurs du type précité, on utilise généralement des pinces d'ancrage du type constitué par un fourreau fendu longitudinalement, muni d'un organe d'amarrage et d'un évidement conique à faible pente dans lequel est monté coulissant un noyau compressible présentant une cavité longitudinale apte à être élargie latéralement pour le logement du conducteur électrique ou de son câble porteur et à se comprimer, en même temps que ledit noyau, autour du conducteur électrique ou de son câble porteur lorsqu'il est déplacé longitudinalement en direction du point de convergence de l'évidement du fourreau jusqu'à son blocage et celui du conducteur électrique ou de son câble porteur, par coincement.

Par le document FR-A-2 436.509, on connaît une pince d'ancrage de ce type dans laquelle le fourreau est de section transversale sensiblement en forme de U, son évidement étant prismatique de faible pente longitudinale et de section transversale rectangulaire, tandis que le noyau compressible est composé de deux éléments ou mâchoires prismatiques formant coins, présentant des faces extérieures inclinées, convergeant au-delà de leur extrémité, dont chacune desdites mâchoires comporte des moyens de liaison en translation avec l'autre et présente, dans sa face tournée vers l'autre, une empreinte longitudinale crantée correspondant sensiblement à la moitié, dans le sens longitudinal, de la cavité longitudinale prévue pour le conducteur ou son câble porteur. Malheureusement, lorsque les conducteurs sont soumis à de fortes tensions pouvant aller jusqu'à 10 000 Newton, les dents des empreintes des mâchoires, qui sont généralement en matière plastique moulée ou injectée, ne pénètrent pas suffisamment dans la gaine isolante du câble porteur du conducteur pour assurer sa tenue car la matière constitutive de la gaine isolante a tendance à fluer sous les dents des mâchoires permettant le glissement longitudinal du conducteur.

La présente invention vise à remédier à cet inconvénient. A cet effet, dans la pince qu'elle concerne et qui est du type précité, au moins une portion longitudinale de la paroi de la cavité du noyau central prévue pour le logement du câble porteur du conducteur et, de préférence, chacune des deux portions longitudinales diamètralement opposées de cette cavité, est constituée par une barrette métallique insérée dans cette paroi et dont la face libre porte une denture.

En raison de la pénétration des dents des barrettes métalliques dans la paroi de la gaine isolante du câble porteur, cette pince est en mesure d'assurer une très bonne tenue du conducteur pour l'ancrage duquel elle est utilisée.

De préférence, chaque dent de chaque barrette métallique présente une section triangulaire isocèle avec une arête libre rectiligne.

Les deux barrettes opposées d'une même pince peuvent être disposées avec leurs dents respectives soit en correspondance, soit tête-bêche.

Dans le cas ou le noyau de la pince est constitué par deux mâchoires prismatiques, la partie médiane du fond de l'empreinte de chaque mâchoire est constituée par la denture d'une barrette métallique.

On conçoit aisément que la pénétration des dents des barrettes métalliques du noyau compressible de la pince augmente la course nécessaire au serrage du câble et cette augmentation de course risque d'engendrer une flèche exagérée du conducteur.

Pour y remédier, suivant une autre caractéristique de l'invention, l'organe d'amarrage du fourreau est de longueur réglable à au moins deux valeurs distinctes. Par exemple, si cet organe est constitué par une câblette, celle-ci est équipée de deux embouts d'accrochage sur le fourreau distants l'un de l'autre d'une longueur sensiblement égale à l'augmentation précitée de la course de serrage du noyau central de la pince.

Suivant une autre caractéristique avantageuse de l'invention mettant à profit le fait que, généralement, les dents des barrettes du noyau central traversent totalement la gaine isolante du câble porteur et entrent en contact avec lui, chaque barrette métallique dentée du noyau central compressible de la pince est relié par un conducteur électrique à une borne accessible permettant sa mise à la terre.

Cette disposition facilite donc considérablement la mise à la terre, souvent recommandée, du câble porteur des conducteurs électriques.

De toute façon, l'invention sera bien comprise à l'aide de la description qui suit, en référence au dessin schématique annexé représentant, à titre d'exemple non limitatif, une forme d'exécution d'une pince d'ancrage selon l'invention, dans le cas où cette pince est du type dont le fourreau est de section transversale sensiblement en U, tandis que son noyau central compressible est composé de deux mâchoires prismatiques :

Figure 1 en est une vue en perspective, légèrement par-dessous ;

Figure 2 en est une vue en coupe transversale suivant II/II de figure 1 ;

Figure 3 en est une vue en coupe longitudinale suivant III/III de figure 1 ;

Figure 4 est une vue en coupe transversale similaire à figure 2, après mise en place du câble porteur du conducteur électrique entre ses mâchoires.

Comme le montre le dessin, la pince d'ancrage selon l'invention est du type comportant un fourreau fendu longitudinalement 2, de section transversale sensiblement en U, délimitant un évidement prismatique 3 dont les faces internes 3a constituées par les ailes latérales 2a du fourreau 2 présentent une légère pente longitudinale. Le noyau central compressible associé au fourreau 2 de cette pince est composé de deux mâchoires prismatiques 4 dont les faces tournées vers les parois 3a de l'évidement 3 du fourreau 2 présentent une légère pente longitudinale complémentaire de celle des parois 3a. Dans sa face tournée vers l'autre, chaque mâchoire 4 présente une empreinte 4a destinée à loger le câble porteur 5a du conducteur 5 à l'ancrage duquel est destinée cette pince.

Le fonctionnement connu de ce type de pince consiste simplement à insérer un conducteur électrique, ou son éventuel câble porteur, dans la cavité 4'a, entre les mâchoires de la pince et à faire glisser ces mâchoires longitudinalement dans l'évidement 3 du fourreau 2 pour provoquer leur rapprochement l'une de l'autre et, par conséquent, le serrage du conducteur ou du câble porteur logé entre elles. Naturellement, les deux mâchoires 4 comportent des moyens de liaison longitudinale, c'est-à-dire imposant à chacune d'elles des déplacements longitudinaux identiques à ceux de l'autre. Dans l'exemple illustré sur le dessin, ces moyens sont, de façon connue en soi, constitués par des saillies latérales 4b s'imbriquant les unes dans les autres.

Le câble porteur 5a du conducteur 5 est entouré, comme le conducteur 5, d'une gaine isolante 5b. D'une manière générale, la gaine isolante 5b du câble porteur 5a, comme celle d'ailleurs du conducteur 5, est en une matière plastique relativement souple pour ne pas faire obstacle aux éventuelles courbures que doit suivre le conducteur électrique, aussi bien lors de son stockage que lors de sa mise en place.

D'une manière générale, tant le fourreau 2 que les mâchoires 4 de ce type de pince sont réalisés en une matière plastique rigide et, notamment, en une résine thermo-plastique telle que le polypropylène.

Le fourreau 2 de cette pince est évidemment équipé de moyens d'amarrage à une console ou autre similaire et, dans l'exemple illustré sur le dessin, ces moyens d'amarrage sont constitués par une câblette 6 dont une extrémité 6a est fixée de manière inamovible au fourreau 2, tandis que son autre extrémité est équipée d'un embout 6b apte à être accroché de manière amovible, de façon connue en soi, au fourreau 2.

Comme indiqué précédemment, en raison de la nature des matériaux en présence, et même si l'on a pris la précaution de cranter les faces en regard des empreintes 4a des mâchoires 4, il est difficile d'empêcher le conducteur 5, et plus particulièrement son câble porteur 5a, de glisser entre les mâchoires 4, notamment en raison du fluage possible de la matière de la gaine isolante 5b dans laquelle les crans en matière plastique des empreintes 4a des mâchoires 4 ne pénètrent pas suffisamment.

Pour éliminer cet inconvénient, dans la pince selon l'invention, la partie médiane de chaque empreinte 4a est constituée par la denture 7a d'une barrette métallique 7 fixée dans la mâchoire 4 considérée, chaque dent 7'a étant destinée à traverser la gaine isolante 5b du câble porteur 5a lors du serrage de la pince sur ce câble. Pour faciliter sa pénétration dans la gaine isolante 5b du câble porteur 5a, chaque dent 7'a de la denture 7a de la barrette métallique 7 a une section transversale triangulaire isocèle et son arête libre est rectiligne. On obtient ainsi l'assurance que chaque dent 7'a pénètre dans la gaine isolante 5b du câble porteur 5a jusqu'à être en contact avec son âme métallique.

On conçoit aisément que la pénétration des dents 7'a des dentures 7a de chaque barrette 7 dans la gaine isolante 5b du câble porteur 5a a pour conséquence d'augmenter la course longitudinale, nécessaire au serrage du câble porteur 5a, des mâchoires 4 dans le fourreau 2 puisque cette pénétration autorise évidemment le rapprochement l'une de l'autre des deux mâchoires 4. Cette course supplémentaire s'effectue évidemment au détriment de la tension du conducteur 5 et autorise de ce fait une augmentation de la flèche formée par ce conducteur entre la pince d'ancrage considérée et son point de fixation situé immédiatement en amont. Pour pallier cet inconvénient en compensant les effets non recherchés de cette course supplémentaire, les moyens d'accrochage du fourreau 2 sont de longueur réglable à au moins deux valeurs distinctes la plus grande étant utilisée lors de la mise en place du conducteur 5 et la plus courte après cette mise en place, pour compenser la course supplémentaire des mâchoires 4 et annuler la flèche du conducteur 5 qui en est la conséquence.

Dans l'exemple illustré sur le dessin, la câblette 6 comporte, à son extrémité amarrée de manière amovible au fourreau 2, un second embout 6'b qui est distant de l'embout 6b d'une longueur sensiblement égale à cette course supplémentaire des mâchoires 4 dans le fourreau 2.

La pénétration des dents 7'a de la denture 7a de chaque barrette 7 jusqu'à son contact avec l'âme métallique du câble porteur 5 est avantageusement mise à profit pour mettre à la terre ce câble porteur 5a, comme cela est souvent recommandé. A cet effet, chaque barrette métallique 7 est reliée à une borne 8 portée par le fourreau 2 par l'intermédiaire d'un conducteur électrique souple 9, cette borne 8 pouvant être facilement connectée à un conducteur de mise à la terre lors de l'accrochage de cette pince à la console, ou autre similaire, portée par le mur ou le poteau qui lui est destiné.

Chaque barrette métallique 7 est avantageusement en un métal suffisamment dur pour sectionner la gaine isolante 5b du câble porteur 5a, mais pas suffisamment dur pour risquer de sectionner son âme métallique. Au contraire, il est souhaité que le métal constituant chaque barrette 7 soit relativement doux pour que l'arête libre de chaque dent 7'a puisse épouser, par déformation, le profil de la partie de l'âme métallique du câble porteur 5a avec laquelle elle entre en contact. On obtient ainsi une meilleure liaison électrique entre l'âme métallique du câble porteur 5a et chaque barrette métallique 7, ce qui est recherché pour une meilleure mise à la terre de ce câble porteur. Pour cette raison, chaque barrette métallique 7 est avantageusement réalisée en aluminium.

Dans l'exemple illustré sur le dessin, chaque barrette métallique 7 est fixée dans le fond de l'empreinte 4a de la mâchoire 4 qui lui correspond par simple engagement dans une rainure de l'extrémité tournée vers la section transversale la plus petite de cette mâchoire, c'est-à-dire vers la direction d'où vient la traction exercée sur le conducteur à l'ancrage duquel la pince est utilisée et fermée.

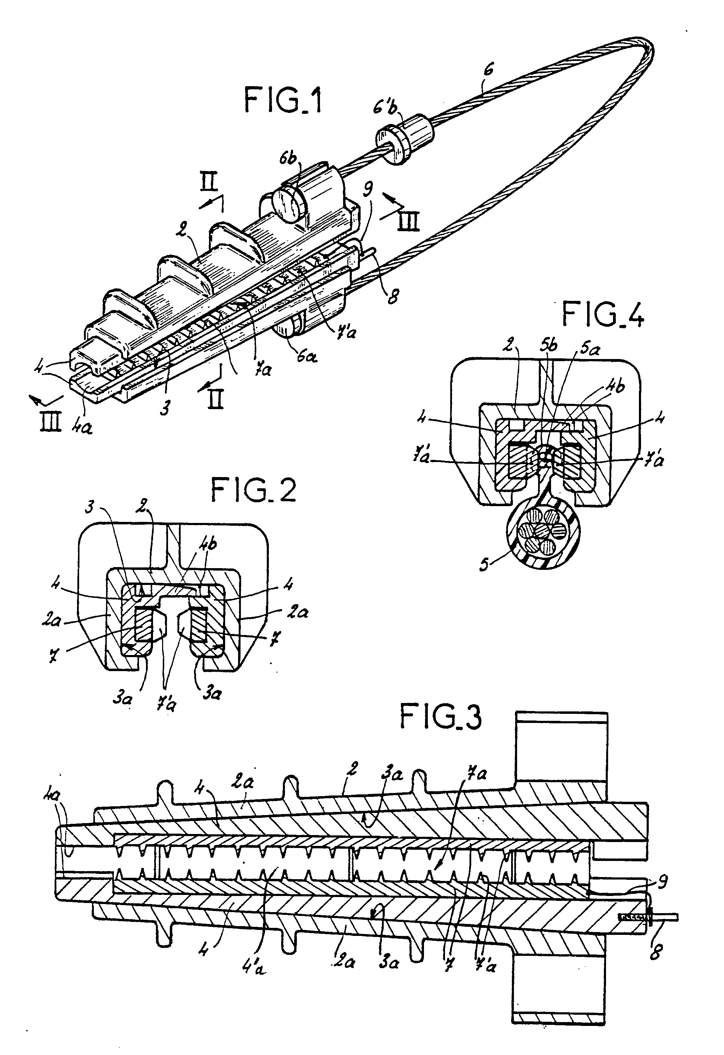

Dans l'exemple illustré sur le dessin et, notamment, sur la figure 3, les barrettes métalliques 7 sont positionnées de manière que leurs dents respectives 7'a soient en correspondance. Il est aussi possible de positionner les barrettes 7 de manière que leurs dents respectives 7'a soient disposées tête-bêche.

**Revendications**

1. Pince d'ancrage pour conducteur électrique isolé équipé d'un câble porteur également isolé, du type constitué par un fourreau (2) fendu longitudinalement, muni d'un organe d'amarrage (6) et d'un évidement conique (3) à faible pente dans lequel est monté coulissant un noyau compressible (4) présentant, de part en part, une cavité longitudinale (4a) apte à être élargie latéralement pour le logement du conducteur électrique ou de son câble porteur et à se comprimer en même temps que ledit noyau autour du conducteur électrique ou de son câble porteur, lorsqu'il est déplacé longitudinalement en direction du point de convergence de l'évidement (3) du fourreau (2), jusqu'à son blocage et celui du conducteur électrique (5) ou de son câble porteur (5a), par coincement, caractérisée en ce qu'au moins une portion longitudinale de la paroi de la cavité (4'a) du noyau central (4) prévue pour le logement du câble porteur (5a) du conducteur (5) et, de préférence, chacune de deux portions longitudinales diamétralement opposées de cette cavité, est constituée par une barrette métallique (7) insérée dans cette paroi et dont la face libre porte une denture (7a).

2. Pince d'ancrage selon la revendication 1, caractérisée en ce que chaque dent (7'a) de chaque barrette métallique (7) présente une section triangulaire isocèle.

3. Pince d'ancrage selon la revendication 2, caractérisée en ce que l'arête libre de chaque dent (7'a) de chaque barrette métallique (7) est rectiligne.

4. Pince d'ancrage selon l'une quelconque des revendications précédentes, et dans laquelle le fourreau (2) est de section transversale sensiblement en forme de U, son évidement étant prismatique de faible pente longitudinale et de section transversale rectangulaire, tandis que le noyau compressible est composé de deux éléments ou mâchoires prismatiques (4) formant coins, présentant des faces extérieures inclinées convergeant au-delà de leur extrémité, dont chacune desdites mâchoires comportent des moyens de liaison en translation avec l'autre et présente, dans sa face tournée vers l'autre, une empreinte longitudinale crantée (4a) correspondant sensiblement à la moitié, dans le sens longitudinal, de la cavité longitudinale (4'a) prévue pour le conducteur (5) ou son câble porteur (5a), caractérisée en ce que la partie médiane, dans le sens longitudinal, de l'empreinte (4a) de chaque mâchoire (4) est constituée par la denture (7a) d'une barrette métallique (7).

5. Pince d'ancrage selon la revendication 4, caractérisée en ce que les deux barrettes métalliques (7) opposées sont disposées avec leurs dents respectives (7'a) en correspondance.

6. Pince d'ancrage selon l'une quelconque des revendications 1 à 4, caractérisée en ce que les dents respectives (7'a) de chacune des barrettes métalliques 7 sont disposées tête-bêche.

7.  Pince d'ancrage selon l'une quelconque des revendications précédentes, caractérisée en ce que l'organe d'amarrage du fourreau (2) est de longueur réglable à au moins deux valeurs distinctes.

8.  Pince d'ancrage selon la revendication 7, du type dans lequel l'organe d'amarrage du fourreau (2) est constitué par une câblette (6), caractérisée en ce que l'extrémité détachable de la câblette (6) est équipée de deux embouts (6b,6'b) d'accrochage sur le fourreau (2), la distance séparant les deux embouts (6b) et (6'b) étant sensiblement égale à la course longitudinale supplémentaire des mâchoires (4) due à la pénétration des dents (7'a) de leurs barrettes métalliques (7) dans la gaine isolante (5b) du câble porteur (5a).

9.  Pince d'ancrage selon l'une quelconque des revendications précédentes, caractérisée en ce que chaque barrette métallique dentée (7) du noyau central compressible (4) est reliée, par un conducteur électrique (9), à une borne accessible (8) permettant sa mise à la terre.

10. Pince d'ancrage selon l'une quelconque des revendications précédentes, caractérisée en ce que chaque barrette métallique (7) est en aluminium.

## Claims

1.  An anchoring clamp for an insulated electrical conductor equipped with a carrying cable which is also insulated, of the type constituted by a sheath (2) split longitudinally, provided with a securing device (6) and a slightly conical cavity (3) in which is slidably mounted a compressible core (4) having a longitudinal through cavity (4a) adapted to be enlarged laterally to house an electrical conductor or its carrying cable and to be compressed at the same time as said core around the electrical conductor or its carrying cable, when it is displaced longitudinally in the direction of the point of convergence of the cavity (3) of the sheath (2), until both it and the electrical conductor or its carrying cable (5a) are locked by jamming, characterised in that at least one longitudinal wall portion (4'a) of the cavity of the central core (4) provided for housing the carrying cable (5a) of the conductor (5), and preferably each of two diametrically opposed longitudinal portions of this cavity, is constituted by a metal bar (7) inserted in this wall and of which the free face carries a toothed formation (7a).

2.  An anchoring clamp according to Claim 1, characterised in that each tooth (7'a) of each metal bar (7) has the sectional shape of an isosceles triangle.

3.  An anchoring clamp according to Claim 2, characterised in that the free edge of each tooth (7'a) of each metal bar (7) is rectilinear.

4.  An anchoring clamp according to any one of the preceding claims, and in which the sheath (2) has a substantially U-shaped transverse section, its cavity being prismatic of small longitudinal inclination and of rectangular transverse section, whilst the compressible core is composed of two elements or prismatic jaws (4) forming wedges having inclined external faces converging beyond their ends, of which each of said jaws includes means for its connection in translation with the other and has, in its surface facing the other, a longitudinal toothed impression (4a) corresponding substantially, in the longitudinal direction, to half of the longitudinal cavity (4'a) provided for the conductor (5) or its carrying cable (5a), characterised in that the median portion in the longitudinal direction of the impression (4a) of each jaw (4) is constituted by the toothed formation (7a) of a metal bar (7).

5.  An anchoring clamp according to Claim 4, characterised in that the two opposed metal bars (7) are disposed with their respective teeth (7'a) in correspondence.

6.  An anchoring clamp according to any one of Claims 1 to 4, characterised in that the respective teeth (7'a) of each of the metal bars (7) are disposed top to bottom.

7.  An anchoring clamp according to any one of the preceding claims, characterised in that the length of the securing device of the sheath (2) is adjustable to at least two distinct values.

8.  An anchoring clamp according to Claim 7, of the type in which the securing device of the sheath (2) is constituted by a cable (6), characterised in that the detachable end of the cable (6) is provided with two anchoring stops (6b, 6'b) on the sheath (2), the distance separating the two stops (6b) and (6'b) being substantially equal to the supplementary longitudinal travel of the jaws (4) due to the penetration of the teeth (7'a) of their metal bars (7) into the insulating sheath (5b) of the supporting cable (5a).

9. An anchoring clamp according to any one of the preceding claims, characterised in that each toothed metal bar (7) of the central compressible core (4) is connected, by an electrical conductor (9), to an accessible terminal (8) permitting its connection to earth.

10. An anchoring clamp according to any one of the preceding claims, characterised in that each metal bar (7) is of aluminium.

**Patentansprüche**

1. Abspannklemme für einen isolierten elektrischen Leiter mit einem ebenfalls isolierten Tragseil in einer Ausführung als längsgeschlitzte Manschette (2), die mit einem Verankerungsorgan (6) und mit einer konischen Ausnehmung (3) schwacher Neigung versehen ist, in der gleitend ein zusammendrückbarer Kern (4) angeordnet ist, der einen längs durchgehenden Hohlraum (4a) aufweist, der zur Aufnahme des elektrischen Leiters oder von dessen Tragseil erweiterbar und gleichzeitig mit dem genannten Kern um den elektrischen Leiter oder dessen Tragseil herum zusammendrückbar ist, wenn er längs in Richtung des Konvergenzpunkts der Ausnehmung (3) der Manschette (2) bis zu seiner Blockierung und der des elektrischen Leiters (5) oder seines Tragseils (5a) durch Verklemmung verschoben wird, dadurch gekennzeichnet, daß wenigstens ein längsverlaufender Bereich der Wandung des Hohlraums (4'a) des zur Aufnahme des Tragseils (5a) des Leiters (5) vorgesehenen zentralen Kerns und vorzugsweise jeder von zwei sich diametral gegenüberstehenden, längsverlaufenden Bereichen dieses Hohlraums durch eine metallische Leiste (7) gebildet wird, die in diese Wandung eingesetzt ist und deren freie Seite eine Zahnung (7a) trägt.

2. Abspannklemme nach Anspruch 1, dadurch gekennzeichnet, daß jeder Zahn (7'a) jeder metallischen Leiste (7) im Schnitt ein gleichschenkliges Dreieck darstellt.

3. Abspannklemme nach Anspruch 2, dadurch gekennzeichnet, daß die freie Kante jedes Zahns (7'a) jeder metallischen Leiste (7) geradlinig verläuft.

4. Abspannklemme nach einem der vorhergehenden Ansprüche und bei der die Manschette (2) einen im wesentlichen U-förmigen Querschnitt aufweist, wobei ihre Ausnehmung prismatisch mit geringer Längsneigung und mit rechteckigem Querschnitt ausgebildet ist, während der zusammendrückbare Kern aus zwei Elementen oder prismatischen Klemmbacken (4) zusammengesetzt ist, die Keile bilden, und die geneigte äußere Seiten aufweisen, die jenseits ihres Endes konvergieren, wobei jede der genannten Klemmbacken translatorische Verbindungsmittel mit der anderen und an ihrer der anderen zugewandten Seite eine längsverlaufende gerippte Aufnahme (4a) aufweist, die in der Längsrichtung im wesentlichen der Hälfte des längsverlaufenden Hohlraums (4'a) entspricht, der für den Leiter (5) oder sein Tragseil (5a) vorgesehen ist, dadurch gekennzeichnet, daß in der Längsrichtung der mittlere Bereich der Aufnahme (4a) jeder Klemmbacke (4) durch die Zahnung (7a) einer metallischen Leiste (7) gebildet wird.

5. Abspannklemme nach Anspruch 4, dadurch gekennzeichnet, daß die beiden gegenüberliegenden metallischen Leisten (7) so angeordnet sind, daß ihre jeweiligen Zähne (7'a) miteinander korrespondieren.

6. Abspannklemme nach einem der Ansprüche 1 bis 4, dadurch gekennzeichnet, daß die jeweiligen Zähne (7'a) jeder der metallischen Leisten (7) gegensinnig angeordnet sind.

7. Abspannklemme nach einem der vorhergehenden Ansprüche, dadurch gekennzeichnet, daß das Verankerungsorgan der Manschette (2) eine auf wenigstens zwei unterschiedliche Werte einstellbare Länge aufweist.

8. Abspannklemme nach Anspruch 7, bei der das Verankerungsorgan der Manschette (2) durch ein Seilstück (6) gebildet ist, dadurch gekennzeichnet, daß das lösbare Ende des Seilstücks (6) mit zwei Ansatzstücken (6b, 6'b) zur Einhängung an der Manschette (2) versehen ist, wobei der Abstand zwischen den beiden Ansatzstücken (6b) und (6'b) im wesentlichen dem zusätzlichen Längsweg der Klemmbacken (4) entspricht; der durch das Eindringen der Zähne (7'a) ihrer metallischen Leisten (7) in den isolierenden Mantel (5b) des Tragseils (5a) bedingt ist.

9. Abspannklemme nach einem der vorhergehenden Ansprüche, dadurch gekennzeichnet, daß jede gezahnte metallische Leiste (7) des zentralen zusammendrückbaren Kerns (4) mittels eines elektrischen Leiters (9) mit einer zugänglichen, die Erdung gestattenden Anschlußklemme (8) verbunden ist.

10. Abspannklemme nach einem der vorhergehenden Ansprüche, dadurch gekennzeichnet, daß jede metallische Leiste (7) aus Aluminium besteht.

FIG.1

FIG.4

FIG.2

FIG.3